# EUROPÄISCHE PATENTSCHRIFT

(11) **EP 3 042 239 B1**
(45) Veröffentlichungstag und Bekanntmachung des Hinweises auf die Patenterteilung: **31.05.2023**
(21) Anmeldenummer: 14758923.8
(22) Anmeldetag: 03.09.2014
(51) Int. Cl.: G02B 27/28, G02B 21/00, G02F 1/33

(54) **RASTERMIKROSKOP MIT POLARISIERTER PROBENBELEUCHTUNG**
SCANNING MICROSCOPE WITH POLARISED SAMPLE ILLUMINATION
MICROSCOPE À BALAYAGE À ÉCLAIRAGE POLARISÉ DE L'ÉCHANTILLON

(30) Priorität: 03.09.2013 DE 102013217499; 23.12.2013 DE 102013227108
(43) Veröffentlichungstag der Anmeldung: 13.07.2016
(73) Patentinhaber: Leica Microsystems CMS GmbH, 35578 Wetzlar (DE)
(72) Erfinder: KRISHNAMACHARI, Vishnu Vardhan, 64342 Seeheim-Jugenheim (DE)
(74) Vertreter: Bradl, Joachim
(86) Internationale Anmeldenummer: PCT/EP2014/068751
(87) Internationale Veröffentlichungsnummer: WO 2015/032823

(56) Entgegenhaltungen:
- EP-A1- 2 157 415
- EP-A1- 2 157 415
- EP-A2- 1 681 675
- EP-A2- 1 681 675
- WO-A1-2005/054924
- WO-A1-2005/054924
- WO-A1-2005/054924
- WO-A1-2008/151884
- WO-A1-2008/151884
- WO-A1-2008/151884
- WO-A2-2012/069612
- WO-A2-2012/069612
- JP-A- 2011 158 413
- JP-A- 2011 158 413
- US-A1- 2001 028 031
- US-A1- 2001 028 031
- US-A1- 2001 028 031
- Thomas J Fellers: "Olympus Fluoview Resource Center: Acousto-Optic Tunable Filters", , 19. März 2013 (2013-03-19), XP055153859, Gefunden im Internet: URL:https://web.archive.org/web/2013031908 5942/http://www.olympusconfocal.com/theory /aotfintro.html [gefunden am 2014-11-19]
- Yasuyuki Ozeki ET AL: "Analysis and experimental assessment of the sensitivity of stimulated Raman scattering microscopy References and links", Appl. Phys. Lett. Phys. Rev. Lett. Opt. Express J. Biomed. Opt. Proc. Natl. Acad. Sci. U.S.A. Phys. Rev. Lett. Opt. Lett. Opt. Lett. Opt. Lett. Jan Feb Feb Appl. Phys. B Science, 1. Januar 1997 (1997-01-01), Seiten 922-924, XP055747962, Gefunden im Internet: URL:https://www.osapublishing.org/DirectPD FAccess/C8F662D1-BDF7-BD27-284834D401CD332 2_176850/oe-17-5-3651.pdf?da=1&id=176850&s eq=0&mobile=no [gefunden am 2020-11-04]
- Thomas J Fellers: "Olympus Fluoview Resource Center: Acousto-Optic Tunable Filters", , 19. März 2013 (2013-03-19), XP055153859, Gefunden im Internet: URL:https://web.archive.org/web/2013031908 5942/http://www.olympusconfocal.com/theory /aotfintro.html [gefunden am 2014-11-19]
- Thomas J Fellers: "Olympus Fluoview Resource Center: Acousto-Optic Tunable Filters", , 19 March 2013 (2013-03-19), XP055153859, Retrieved from the Internet: URL:https://web.archive.org/web/2013031908 5942/http://www.olympusconfocal.com/theory /aotfintro.html [retrieved on 2014-11-19]
- Yasuyuki Ozeki ET AL: "Analysis and experimental assessment of the sensitivity of stimulated Raman scattering microscopy References and links", Appl. Phys. Lett. Phys. Rev. Lett. Opt. Express J. Biomed. Opt. Proc. Natl. Acad. Sci. U.S.A. Phys. Rev. Lett. Opt. Lett. Opt. Lett. Opt. Lett. Jan Feb Feb Appl. Phys. B Science, 1 January 1997 (1997-01-01), pages 922-924, XP055747962, Retrieved from the Internet: URL:https://www.osapublishing.org/DirectPD FAccess/C8F662D1-BDF7-BD27-284834D401CD332 2_176850/oe-17-5-3651.pdf?da=1&id=176850&s eq=0&mobile=no [retrieved on 2020-11-04]

## Beschreibung

Die Erfindung betrifft ein Verfahren zum Untersuchen einer Probe, wobei die Probe mit Beleuchtungslicht beaufschlagt wird und von der Probe ausgehendes Detektionslicht zu einem Detektor gelenkt wird und wobei das Beleuchtungslicht durch ein akustooptisches Bauteil gelenkt wird, mit dem das Beaufschlagen der Probe mit Beleuchtungslicht zeitweise unterbrochen werden kann, wobei die Probe mit einem ersten Beleuchtungslichtbündel, das eine erste Linearpolarisationsrichtung aufweist, und mit einem zweiten Bleuchtungslichtbündel (5), dessen Linearpolarisationsrichtung mittels einer Umschaltvorrichtung fortlaufend zwischen der ersten Linearpolarisationsrichtung und einer zweiten, von der ersten Linearpolarisationsrichtung verschiedenen, Linearpolarisationsrichtung umgeschaltet wird, beleuchtet wird, wobei das Beleuchtungslicht der ersten Linearpolarisationsrichtung entlang einem ersten Lichtweg verläuft und das Beleuchtungslicht der zweiten Linearpolarisationsrichtung entlang einem zweiten Lichtweg verläuft, und wobei das akustooptische Bauteil den ersten Lichtweg und den zweiten Lichtweg vereinigt, so dass das Beleuchtungslicht der ersten Linearpolarisationsrichtung kollinear vereinigt mit dem Beleuchtungslicht der zweiten Linearpolarisationsrichtung auf einen gemeinsamen Beleuchtungsstrahlengang zur Beleuchtung der Probe gelangt.

Die Erfindung betrifft außerdem eine Vorrichtung, insbesondere ein Scanmikroskop oder konfokales Scanmikroskop, zur Durchführung eines solchen Verfahrens, sowie eine Vorrichtung, insbesondere Scanmikroskop oder konfokales Scanmikroskop, zum Untersuchen einer Probe, wobei die Probe mit Beleuchtungslicht beaufschlagt wird und von der Probe ausgehendes Detektionslicht zu einem Detektor gelenkt wird und wobei das Beleuchtungslicht durch ein akustooptisches Bauteil gelenkt wird, mit dem das Beaufschlagen der Probe mit Beleuchtungslicht zeitweise unterbrochen werden kann.

Die Erfindung betrifft darüber hinaus ein Modul zum Herstellen einer erfindungsgemäßen Vorrichtung.

In einem Mikroskop, insbesondere in einem Scanmikroskop oder einen konfokalen Scanmikroskop, werden Proben häufig mit einem Beleuchtungslichtbündel beleuchtet, das durch Vereinigung mehrerer Beleuchtungslichtbündel erzeugt wurde, um das von der beleuchteten Probe emittierte Reflexions- oder Fluoreszenzlicht zu beobachten.

Beispielsweise in der Scanmikroskopie wird der Fokus eines solchen Beleuchtungslichtbündel mit Hilfe einer steuerbaren Strahlablenkeinrichtung, im Allgemeinen durch Verkippen zweier Spiegel, in einer Objektebene bewegt, wobei die Ablenkachsen meist senkrecht aufeinander stehen, so dass ein Spiegel in x-, der andere in y-Richtung ablenkt. Die Verkippung der Spiegel wird beispielsweise mit Hilfe von Galvanometer-Stellelementen bewerkstelligt. Die Leistung des vom Objekt kommenden Lichtes wird in Abhängigkeit von der Position des Abtaststrahles gemessen. Üblicherweise werden die Stellelemente mit Sensoren zur Ermittlung der aktuellen Spiegelstellung ausgerüstet.

Speziell in der konfokalen Scanmikroskopie wird ein Objekt mit dem Fokus eines Beleuchtungslichtbündels in drei Dimensionen abgetastet. Ein konfokales Scanmikroskop umfasst im Allgemeinen eine Lichtquelle, eine Fokussieroptik, mit der das Licht der Quelle auf eine Lochblende - die sog. Anregungsblende - fokussiert wird, einen Strahlteiler, eine Strahlablenkeinrichtung zur Strahlsteuerung, eine Mikroskopoptik, eine Detektionsblende und die Detektoren zum Nachweis des Detektions- bzw. Fluoreszenzlichtes. Das Beleuchtungslicht wird beispielsweise über einen Strahlteiler eingekoppelt.

Das vom Objekt kommende Fluoreszenzlicht gelangt über die Strahlablenkeinrichtung zurück zum Strahlteiler, passiert diesen, um anschließend auf die Detektionsblende fokussiert zu werden, hinter der sich die Detektoren befinden. Detektionslicht, das nicht direkt aus der Fokusregion stammt, nimmt einen anderen Lichtweg und passiert die Detektionsblende nicht, so dass man eine Punktinformation erhält. Durch sequentielles Abtasten des Objekts kann ein dreidimensionales Bild erzeugt werden.

Das Gebiet der kohärenten Raman-Mikroskopie (CRM; coherent raman microscopy) hat seit einiger Zeit eine große Bedeutung und Nutzen bei der bildgebenden Untersuchung von biologischen und pharmakologischen Proben und im Bereich der Nahrungsmittelwissenschaften gewonnen. Der Vorteil der kohärenten Raman-Mikroskopie gegenüber der herkömmlichen Raman-Mikroskopie ist insbesondere die höhere Geschwindigkeit der Bildgebung.

Kohärente Anti-Stokes-Raman-Streuung (CARS, coherent anti-stokes Raman Scattering), kohärente Stokes-Raman-Streuung (CSRS; coherent Stokes Raman scattering), ramaninduzierte Kerr-Effekt-Streuung (Rikes; Raman-induced Kerr-Effect scattering) und stimulierte Raman-Streuung (SRS; stimulated Raman scattering) stellen verschiedene CRM Techniken dar. Unter diesen hat die stimulierte Raman-Streuung (SRS) den besonderen Vorteil, dass die nicht resonanten Hintergrundsignale vollständig ausgeblendet werden können und ein höheres Signal-zu-Rausch-Verhältnis ermöglicht ist.

Die Technik der stimulierten Raman-Streuung (SRS) beruht darauf, zwei gepulste optische Felder (mit Frequenzen im Bereich von 40-100MHz) unterschiedlicher Wellenlängen über ein konfokales Mikroskopsystem auf eine zu untersuchende Probe zu leiten. Durch geeignete Strahlführung und Fokussierung wird hierbei sichergestellt, daß die beiden optischen Felder räumlich und zeitlich in der Probe überlappen.

Eines der beiden optischen Felder wird mit einer Frequenz Q, typischerweise im kHz- bis MHz-Bereich, entweder intensitätsmoduliert oder frequenzmoduliert oder polarisationsmoduliert, bevor es in der Probe mit dem anderen optischen Feld interagiert. Nach Durchlaufen der Probe oder einer Reflektion an der Probe wird das zweite optische Feld, das ursprünglich nicht moduliert war, detektiert und die Modulationsamplitude von dessen mit der Frequenz Ω, gemessen. Die Modulationsamplitude stellt das SRS-Signal dar. Beispielsweise kann das optische Feld der höheren Wellenlänge ein sog. "Stokes"-Beleuchtungslichtbündel sein, während das optische Feld des niedrigeren Wellenlänge als sog. "Pump"-Beleuchtungslichtbündel bezeichnet werden kann.

Es ist beispielsweise möglich, das Stokes Beleuchtungslichtbündel zu modulieren und das Pump-Beleuchtungslichtbündel nach einer Probenwechselwirkung zu detektieren. In diesem Fall wird das resultierende Signal als stimulierter Raman Verlust (SRL, stimulated raman loss) bezeichnet. Im anderen Fall, nämlich wenn ursprünglich das Pump-Beleuchtungslichtbündel moduliert wird, dann wird das Stokes-Beleuchtungslichtbündel nach einer Probenwechselwirkung detektiert und das resultierende Signal wird als stimulierte Raman-Verstärkung (SRG; stimulated raman gain) bezeichnet. Sowohl SRL und SRG sind gängige SRS-Verfahren, wobei der Informationsgehalt der Signale bei beiden Verfahren fast identisch ist. Unter den verschiedenen Modulationsverfahren zum Erzeugen von SRS-Bildern ist die Intensitätsmodulation die einfachste und robusteste Technik.

Allerdings gibt es bei den SRS-Verfahren, bei denen eines der optischen Felder intensitätsmoduliert wird, in der Praxis das Problem, dass ausschließlich sehr dünne Proben verwendet werden können. Der Grund hierfür ist, dass die im Fokalvolumen sehr starken optischen Felder den Brechungsindex der Probe beeinflussen. Dieser Effekt ist als Kerr-Effekt bekannt. Durch eine Modulation eines der oben genannten optischen Felder kommt es folglich auch zu einer Modulation des Brechungsindex der Probe, die unterschiedliche Sekundäreffekte, wie Selbstphasenmodulation und die Ausbildung einer sich zeitlich ändernden Kerr-Linse, nach sich zieht.

Dies führt zu einer zeitlichen Modulation der Divergenz des von der Probe ausgehenden, zu detektierenden optischen Feldes. Wenn die numerische Apertur der Sammeloptik kleiner ist, als die numerische Apertur der Fokussieroptik, die das Beleuchtungslicht fokussiert, wird ein zeitlich schwankender Anteil des von der Probe ausgehenden Detektionslichtes von der Sammeloptik nicht erfasst. Die Modulation der Divergenz des Detektionslichtbündels wird folglich vom Detektor als Intensitätsmodulation wahrgenommen, die - sogar bei derselben Modulationsfrequenz - das SRS-Signal, das man eigentlich detektieren möchte, überlagert.

Dies führt zu einem störenden Signalhintergrund.

Um diesen Effekt zu überwinden, werden Sammeloptiken großer numerischer Apertur eingesetzt. Dies schränkt jedoch die Probendicke, die bei hochauflösender SRS-Bildgebung verwendet werden können, sehr ein. Es müssen hierzu dünne Probenscheiben mit einer Dicke von einigen zehn Mikrometern hergestellt werden. Die Folgen dieser Phänomene sind lange Probenvorbereitungszeiten und Einschränkungen für die Verwendung der bildgebenden Verfahren für hochauflösendes Live-Cell-Imaging.

Diese Nachteile gibt es weder beim frequenzmodulierten SRS (FM-SRS), noch beim polarisationsmodulierten SRS (PM-SRS). Allerdings ist die Umsetzung eines robusten FM-SRS technisch sehr aufwändig.

Aber auch beim polarisationsmodulierten SRS gibt es das in der Praxis sehr störende Problem, dass die Umsetzung dieser Technologie mit einem, insbesondere konfokalen, Scanmikroskop, dessen Beleuchtungslicht mit Hilfe eines oder mehrerer AOTF hinsichtlicht der Lichtleistung eingestellt oder dessen Beleuchtung mit Hilfe eines oder mehrerer AOTF zweitweise abgeschaltet wird, nicht möglich ist, weil der AOTF eines solchen Scanmikroskops, wie es beispielsweise aus DE198 29 981 A1 bekannt ist, nur auf Beleuchtungslicht jeweils einer Wellenlänge und einer bestimmten Polarisierung wirkt.

Aus der US 2001/028031 A1 sind verschiedene Vorrichtungen zum Vereinigen von Licht zweier Laserlichtquellen bekannt. Die beiden Lichtquellen können dabei gepulstes Licht emittieren, und die Vorrichtung kann einen akustooptischen Deflekter (AOD) aufweisen.

Die EP 2 157 415 A1 beschreibt ein bildgebendes Mikroskopsystem, das zwei gepulste Lichtquellen und ein Modulationssystem aufweist. Die von den beiden Lichtquellen ausgesandten Lichtbündel werden vor dem Beleuchten einer Probe zusammengeführt, wobei eines der beiden Lichtbündel mit einer bestimmten Frequenz polarisationsmoduliert werden kann.

Es ist daher die Aufgabe der vorliegenden Erfindung, ein Verfahren anzugeben, das es ermöglicht, eine kohärente Raman-Mikroskopie mit einem Scanmikroskop umzusetzen, mit dem ein zeitweises Unterbrechen der Beleuchtung und/oder ein Einstellen der Lichtleistung der Beleuchtung möglich ist.

Die Aufgabe wird durch ein Verfahren nach Anspruch 1 gelöst.

Es ist eine weitere Aufgabe der vorliegenden Erfindung eine Vorrichtung, insbesondere ein Scanmikroskop oder konfokales Scanmikroskop, anzugeben, das sowohl ein zeitweises Unterbrechen der Beleuchtung und/oder ein Einstellen der Lichtleistung der Beleuchtung ermöglicht, als auch die Durchführung einer Probenuntersuchung auf der Basis kohärenter Raman-Spektroskopie erlaubt.

Die weitere Aufgabe wird durch eine Vorrichtung nach Anspruch 11 zum Ausführen des Verfahrens nach Anspruch 1 gelöst.

Es ist eine zusätzliche Aufgabe der vorliegenden Erfindung eine Möglichkeit anzugeben, die es erlaubt, schnell und effizient eine Vorrichtung zur Durchführung einer Probenuntersuchung auf der Basis kohärenter Raman-Spektroskopie, das auch ein zweitweises Unterbrechen der Beleuchtung erlaubt, herzustellen oder eine bestehende Vorrichtung hierzu nachrüsten zu können.

Diese Aufgabe wird durch ein Modul nach Anspruch 12 zum Herstellen der Vorrichtung nach Anspruch 11 gelöst.

Die Erfindung hat den Vorteil, dass das erste und/oder das zweite Beleuchtungslichtbündel beispielsweise schnell unterbrochen oder wieder freigegeben werden kann. Auch die Möglichkeit eines schnellen Umschaltens zu anderen Wellenlängen oder zu anderen Wellenlängenkombinationen ist in vorteilhafter Weise möglich. Hierbei kann insbesondere ausgenutzt werden, dass das akustooptische Bauteil zumeist innerhalb von wenigen Mikrosekunden geschaltet werden kann.

Erfindungsgemäß ist es auch möglich, dass mit dem akustooptischen Bauteil die Lichtleistung des ersten und/oder des zweiten Beleuchtungslichtbündels eingestellt und/oder geregelt wird. Die Erfindung hat den ganz besonderen Vorteil, dass das Beaufschlagen einer Probe mit dem ersten Beleuchtungslichtbündel und/oder mit dem zweiten Beleuchtungslichtbündel mit Hilfe des akustooptischen Bauteils zeitweise unterbrochen werden kann. Insbesondere kann auf diese Weise eine unnötige Belastung der Probe und damit beispielsweise ein vorschnelles Ausbleichen der Probe wirksam vermieden werden. Beispielsweise kann vorgesehen sein, dass das akustooptische Bauteil, insbesondere automatisch gesteuert, den Lichtweg zu der Probe nur freigibt, wenn eine Detektion des Beleuchtungslichtes erfolgt oder wenn es im Vorfeld einer Untersuchtung, beispielsweise für ein Voransichtsbild, erforderlich ist. Insbesondere kann vorteilhaft vorgesehen sein,dass das Beaufschlagen einer Probe mit dem ersten Beleuchtungslichtbündel und/oder mit dem zweiten Beleuchtungslichtbündel durch das akustooptische Bauteil, insbesondere automatisch, unterbrochen wird, wenn das erste Beleuchtungslichtbündel und/oder das zweite Beleuchtungslichtbündel einen Bereich der Probe beleuchten würden, der außerhalb eines zu untersuchenden Bereichs liegt. Alterntiv oder zusätzlich kann auch vorgesehen sein, dass das Beaufschlagen einer Probe mit dem ersten Beleuchtungslichtbündel und/oder mit dem zweiten Beleuchtungslichtbündel durch das akustooptische Bauteil, insbesondere automatisch, in den Umkehrbereichen eines mäanderförmigen Scans und/oder auf den Rücklaufbahnen eines, insbesondere mäanderförmigen, Scans unterbrochen wird.

Insbesondere kann vorgesehen sein, dass in dem akustooptischen Bauteil wenigstens eine mechanische Welle propagiert, an der wenigstens eines der Beleuchtungslichtbündel gebeugt und dadurch auf den Beleuchtungsstrahlengang zur Bleuchtung der Probe gelenkt wird.

Die Erfindung hat darüber hinaus den ganz besonderen Vorteil, dass eine Untersuchung einer Probe auch unter Verwendung von Sammeloptiken, die keine große nummerische Apertur aufweisen, ermöglicht ist, weil die eingangs beschriebenen Probleme, insbsondere ein zeitliches Schwanken der Divergenz des Detektionslichtes, bei der erfindungsgemäßen Lösung nicht auftritt. Daher ist es in besonders vorteilhafter Weise auch möglich, Proben zu untersuchen, die eine wesentlich größere Dicke aufweisen, als die Proben, die bislang untersucht werden konnten.

Bei einer besonders vorteilhaften Ausführung propagiert in dem akustooptischen Bauteil eine erste mechanische Welle, deren Frequenz derart gewählt wird, dass an ihr das erste Beleuchtungslichtbündel gebeugt und dadurch auf den Beleuchtungsstrahlengang zur Bleuchtung der Probe gelenkt wird. Alternativ oder zusätzlich kann vorgesehen sein, dass in dem akustooptischen Bauteil eine zweite mechanische Welle propagiert, deren Frequenz derart gewählt wird, dass an ihr das zweite Beleuchtungslichtbündel gebeugt und dadurch auf den Beleuchtungsstrahlengang zur Bleuchtung der Probe gelenkt wird, wenn dieses die erste Linearpolarisationsrichtung aufweist. Es ist alternativ oder zusätzlich vorteilhaft auch möglich, dass eine dritte mechanische Welle propagiert, deren Frequenz derart gewählt wird, dass an ihr das zweite Beleuchtungslichtbündel gebeugt und dadurch auf den Beleuchtungsstrahlengang zur Beleuchtung der Probe gelenkt wird, wenn dieses die zweite Linearpolarisationsrichtung aufweist.

Inbesondere kann vorteilhaft vorgesehen sein, dass das akustootische Bauteil wenigstens einen AOTF (acousto optical tunable filter) aufweist, in dem die mechanische Welle oder die mechanischen Wellen propagieren.

Die Funktionsweise eines solchen akustooptischen Bauteils beruht im Wesentlichen auf der Wechselwirkung der eingekoppelten Beleuchtungslichtbündel mit einer mechanischen Welle oder mehreren mechanischen Wellen. Akustooptische Bauteile bestehen in der Regel aus einem sogenannten akustooptischen Kristall, an dem ein elektrischer Wandler (in der Literatur oft als Transducer bezeichnet) angebracht ist. Vorzugsweise umfasst der Wandler ein piezoelektrisches Material, sowie eine darüber liegende und eine darunter liegende Elektrode. Durch elektrisches Beschalten der Elektroden mit Radiofrequenzen, die typischer Weise im Bereich zwischen 30 MHz und 800 MHz liegen, wird das piezoelektrische Material zum Schwingen gebracht, so dass eine akustische Welle, d.h. eine Schallwelle, entstehen kann, die nach ihrer Entstehung den Kristall durchläuft. Meist wird die akustische Welle nach dem Durchlaufen eines optischen Wechselwirkungsgebiets an der gegenüberliegenden Kristallseite absorbiert oder wegreflektiert.

Akustooptische Kristalle zeichnen sich dadurch aus, dass die entstehende Schallwelle die optischen Eigenschaften des Kristalls verändert, wobei durch den Schall eine Art optisches Gitter oder eine vergleichbare optisch aktive Struktur, beispielsweise ein Hologramm, induziert wird. Durch den Kristall tretendes Licht erfährt an dem optischen Gitter eine Beugung. Entsprechend wird das Licht in verschiedenen Beugungsordnungen in Beugungsrichtungen gelenkt. Es gibt akustooptische Bauteile, die das gesamte einfallende Licht mehr oder weniger unabhängig von der Wellenlänge beeinflussen. Dazu sei lediglich beispielhaft auf Bauteile wie AOM, AOD und Frequenzschieber verwiesen. Außerdem gibt es auch bereits Bauteile, die beispielsweise abhängig von den eingestrahlten Radiofrequenzen selektiv auf einzelne Wellenlängen wirken (AOTFs). Häufig bestehen die akustooptischen Elemente aus doppelbrechenden Kristallen, wie beispielsweise Tellurdioxid, wobei insbesondere die Lage der Kristallachse relativ zur Einfallsrichtung des Lichts und seiner Polarisation die optische Wirkung des jeweiligen Elements bestimmt.

Insbesondere, wenn in dem akustooptischen Strahlvereiniger beispielsweise ein AOTF verwendet wird, muss die mechanische Welle eine ganz bestimmte Frequenz aufweisen, damit genau für das Licht der gewünschten Beleuchtungslichtwellenlänge und der gewünschten Polarisation die Bragg-Bedingung erfüllt ist. Licht, für das die Bragg-Bedingung nicht erfüllt ist, wird bei diesen akustooptischen Bauteilen durch die mechanische Welle nicht abgelenkt.

Es kann insbesondere vorgesehen sein, dass die erste Linearpolarisationsrichtung die Linearpolarisationsrichtung des ordentlichen Lichtes bezogen auf eine Doppelbrechungseigenschaft des Kristalles ist und/oder dass die zweite Linearpolarisationsrichtung die Linearpolarisationsrichtung des außerordentlichen Lichtes bezogen auf eine Doppelbrechungseigenschaft des Kristalles ist; oder umgekehrt. Insbesondere kann - alternativ oder zusätzlich - vorgesehen sein, dass die erste Linearpolarisationsrichtung oder die zweite Linearpolarisationsrichtung in der Ebene angeordnet ist, die von der Ausbreitungsrichtung der mechanischen Welle und der Ausbreitungsrichtung der einfallenden Beleuchtungslichtbündel aufgespannt ist.

Bei einer besonderen Ausführung der Erfindung wird zunächst ein Primärbeleuchtungslichtbündel, das das erste Beleuchtungslichtbündel und/oder das zweite Beleuchtungslichtbündel kollinear vereinigt beinhaltet, erzeugt. Ein solches Primärbeleuchtungslichtbündel kann beispielsweise durch Vereinigen des ersten Beleuchtungslichtbündels mit dem zweiten Beleuchtungslichtbündel erzeugt sein, wobei das zweite Beleuchtungslichtbündel vor der Vereinigung einen räumlich vom ersten Beleuchtungslichtbündel separaten Lichtweg durchlaufen hat, in dem ein Element zum Umschalten der Linearpolarisationsrichtung, beispielsweise ein elektrooptischer oder akustooptischer Modulator, angeordnet ist.

Das Primärbeleuchtungslichtbündel wird dann in Abhängigkeit von der Linearpolarisation, insbesondere mit einem Polarisationsstrahlteiler, räumlich aufgespalten und die Anteile unterschiedlicher Linearpolarisation getrennt voneinander auf den ersten und zweiten Lichtweg gelenkt. Diese Vorgehensweise hat den Vorteil, dass das Beleuchtungslicht der ersten Linearpolarisationsrichtung in einen ersten Eingang des akustoptischen Bauteils eingekoppelt werden kann, während das Beleuchtungslicht der zweiten Linearpolarisationsrichtung in einen zweiten, vom ersten Eingang verschiedenen, insbesondere räumlich getrennten, Eingang des akustoptischen Bauteils eingekoppelt werden kann.

Insbesondere können die Anteile unterschiedlicher Linearpolarisation derart eingekoppelt werden, dass jeweils mindestens eine mechanische Welle auf einen der Anteile wirkt, wodurch die Anteile durch Beugung auf einen gemeinsamen Beleuchtungsstrahlengang umgelenkt werden, auf dem die Anteile kollinear vereinigt verlaufen.

Zur Aufnahme von zweidimensionalen oder dreidimensionalen Bilddaten kann vorgesehen sein, dass zumindest ein Teilbereich der Probe mit dem ersten Beleuchtungslichtbündel und dem zweiten Beleuchtungslichtbündel gescannt wird und/oder dass die Foki des ersten Beleuchtungslichtbündel und des zweiten Beleuchtungslichtbündels gemeinsam mit Hilfe einer Strahlablenkeinrichtung über oder durch die Probe bewegt werden und dabei das von der Probe ausgehende Detektionslicht detektiert wird. Durch ein gemeinsames Ablenken der kollinear vereinigten Beleuchtungslichtbündel ist sichergestellt, dass die Foki der Beleuchtungslichtbündel in der Probe räumlich überlappen.

Bei einer ganz besonders vorteilhaften Ausführung ist wenigstens eines der Beleuchtungslichtbündel, also entweder das erste Beleuchtungslichtbündel und/oder das zweite Beleuchtungslichtbündel. Gepulst. Insbesondere kann vorgesehen sein, dass das erste Beleuchtungslichtbündel und das zweite Beleuchtungslichtbündel mit derselben Pulsfolgefrequenz gepulst sind. Dies ist insbesondere erforderlich, wenn die ersten Beleuchtungslichtpulse und die zweiten Beleuchtungslichtpulse in der Probe zeitlich überlappen sollen.

Vorzugsweise liegt die Pulsfolgefrequenz des ersten Beleuchtungslichtbündels und/oder die Pulsfolgefrequenz des zweiten Beleuchtungslichtbündels im Bereich von 40 MHz bis 100 MHz, insbesondere bei 80 MHz.

Die erfindungsgemäße Vorrichtung kann beispielsweise zumindest eine Lichtquelle aufweisen, die ein Primärbeleuchtungslichtbündel, das das erste Beleuchtungslichtbündel und/oder das zweite Beleuchtungslichtbündel beinhaltet, erzeugt. Das erste Beleuchtungslichtbündel und/oder das zweite Beleuchtungslichtbündel können beispielsweise mit Hilfe eines modengekoppelten Pulslasers erzeugt werden. Einem solchen Pulslaser kann ein Element zur Beeinflussung der Wellenlänge - zumindest für eines der Beleuchtungslichtbündel - nachgeschaltet sein. Es ist auch möglich, dass erste Beleuchtungslichtbündel und/oder das zweite Beleuchtungslichtbündel einer sogenannten photonischen Faser oder einer sogenannten tapered Fiber entstammen, die Teil einer Weißlichtquelle ist.

Insbesondere um eine zeitliche Überlagerung der Pulse in der Probe zu gewährleisten ist bei einer ganz besonders vorteilhaften Ausführung vorgesehen, dass das Beleuchtungslicht der ersten Linearpolarisationslichtung, das entlang dem ersten Lichtweg verläuft, einen Zug erster Beleuchtungslichtpulse aufweist und dass das Beleuchtungslicht der zweiten Linearpolarisationslichtung, das entlang dem zweiten Lichtweg verläuft, einen Zug zweiter Beleuchtungslichtpulse aufweist, wobei die Phase des Zugs von ersten Beleuchtungslichtpulsen relativ zu dem Zug von zweiten Beleuchtungslichtpulsen, insbesondere zu Null, eingestellt und/oder geregelt wird. Die Phase kann beispielsweise durch Verändern der Länge des ersten und/oder des zweiten Lichtweges eingestellt oder geregelt werden.

Beispielsweise kann ein Phaseneinstellmittel zum Einstellen der Phase des Zugs von ersten Beleuchtungslichtpulsen relativ zu dem Zug von zweiten Beleuchtungslichtpulsen vorhanden sein. Insbesondere kann, als Teil eines solchen Phaseneinstellmittels, im ersten Lichtweg ein erstes Mittel zum Einstellen der Länge des ersten Lichtweges angeordnet sein. Alternativ oder zusätzlich kann auch im zweiten Lichtweg wenigstens ein zweites Mittel zum Einstellen der Länge des zweiten Lichtweges angeordnet sein.

Eine ganz besonders vorteilhafte Ausführung der erfindungsgemäßen Vorrichtung weist einen Regelkreis zum Regeln der Phase auf einen vorbestimmten oder vorbestimmbaren Wert auf. Insbesondere kann, vorgesehen sein, dass ein Regelkreis zum Regeln der Phase vorhanden ist, der die Phase - insbesondere bezogen auf einen gemeinsamen Fokalbereich in der Probe - auf Null regelt.

Bei einer einfachen Ausführung des Verfahrens wird an Hand des Detektionssignales, das aus dem von der Probe ausgehenden Detektionslicht gewonnen wird, festgestellt, ob eine ausreichende zeitliche Überlagerung der Beleuchtungslichtpulse erreicht ist. Alternativ oder zusätzlich kann das Maß der zeitlichen Überlagerung auch mit einem geeigneten Sensor, beispielsweise mit einem Zwei-Photonen-Absorptions-Detektor, ermittelt werden. Hierbei kann insbesondere vorgesehen sein, dass ein Teil des auf dem gemeinsamen Beleuchtungsstrahlengang propagierenden Beleuchtungslicht räumlich abgespalten und zu dem Sensor geführt wird. Auf diese Weise kann parasitär, also auch während einer Probenuntersuchung, die zeitliche Koinzidenz der Beleuchtungslichtpulse überprüft und überwacht werden.

Sowohl der Sensor, als auch das Phaseneinstellmittel können vorteilhaft Bestandteile des oben erwähnten Regelkreises sein. Insbesondere kann auch vorgesehen sein, dass eine Regelungselektronik, die Signale von dem Sensor empfängt und Stellsignale an das Phaseneinstellmittel ausgibt, Bestandteil des Regelkreises ist.

Insbesondere zum Durchführen einer Probenuntersuchung mittels kohärenter Raman-Spektroskopie und/oder zum Erzeugen einer Raman-Abbildung, insbesondere einer SRS-Abbildung, wenigstens eines Teils einer mikroskopischen Probe, kann beispielsweise das erste Beleuchtungslichtbündel als Stokes-Beleuchtungslichtbündel und das zweite Beleuchtungslichtbündel als Pump-Beleuchtungslichtbündel fungieren. Alternativ ist es auch möglich, dass das zweite Beleuchtungslichtbündel als Stokes-Beleuchtungslichtbündel und das erste Beleuchtungslichtbündel als Pump-Beleuchtungslichtbündel fungiert.

Eine besonders zuverlässige und genaue Probenuntersuchung ist hierbei insbesondere dann möglich, wenn die Linearpolarisation des zweiten Beleuchtungslichtbündels mit einer Frequenz im Bereich von 10 bis 30 MHz, insbesondere im Bereich von 10 MHz bis 20 MHz, insbesondere von 20 MHz umgeschaltet wird. Insbesondere kann es von Vorteil sein, wenn die Linearpolarisation des zweiten Beleuchtungslichtbündels mit einer Frequenz umgeschaltet wird, die kleiner ist, als eine Pulsfolgefrequenz des ersten und/oder des zweiten Beleuchtungslichtbündels.

Wie bereits erwähnt kann vorteilhaft ein Modul die, ggf. auch nachträgliche, Herstellung einer erfindungsgemäßen Vorrichtung auf einfache Weise ermöglichen. Das Modul ist vorzugsweise derart ausgebildet, dass es im Strahlengang eines Mikroskops, insbesondere eines konfokalen Scanmikroskops, angeordnet werden kann, wobei das Modul Justiermittel zum Justieren des Moduls relativ zu den übrigen Komponenten des Mikroskops aufweisen kann. Vorzugsweise sind die optischen Bauteile des Moduls vorjustiert, so dass lediglich das Modul insgesamt relativ zum Strahlengang eines Mikroskops justiert werden muss.

Bei einer besonderen Ausführung weist das Modul einen Polarisationsstrahlteiler auf, der den Beginn eines ersten und eines zweiten Lichtweges definiert. Ein Primärbeleuchtungslichtbündel kann, wie weiter oben bereits beschrieben ist, mit dem Polarisationsstrahlteiler in Abhängigkeit von der Linearpolarisation räumlich aufgespalten und die Anteile unterschiedlicher Linearpolarisation getrennt voneinander auf den ersten und zweiten Lichtweg gelenkt werden. Darüber hinaus ist ein akustooptisches Bauteil vorgesehen, das den ersten und den zweiten Lichtweg wieder vereinigt, so dass ein räumliches Überlappen der Beleuchtungslichtbündel und deren Anteile in der Probe ermöglicht ist.

Bei einer ganz besonders vorteilhaften Ausführung beinhaltet das Modul im ersten Lichtweg ein erstes Mittel zum Einstellen der Länge des ersten Lichtweges und/oder im zweiten Lichtweg wenigstens ein zweites Mittel zum Einstellen der Länge des zweiten Lichtweges. Mit Hilfe wenigstens eines dieser Mittel kann die Phase einesentlang des ersten Lichtweges propagierenden Pulszuges relativ zu einem entlang des zweiten Lichtweges propagierenden Pulszuges eingestellt werden.

Das Modul kann insbesondere auch eine, insbesondere elektronische, Regelungsvorrichtung, zum Regeln der Phase eines auf dem ersten Lichtweg propagierenen Pulszuges relativ zu einem auf dem zweiten Lichtweg propagierenden propagierenen Pulszuges, aufweisen.

Das Modul kann vorteilhaft auch einen Sensor, beispielsweise einen Zwei-Photonen-Absorptions-Detektor, aufweisen, mit dem das Maß der zeitlichen Überlagerung von ersten Beleuchtungslichtpulsen, die entlang dem ersten Lichtweg propagieren und zweiten Beleuchtungslichtpulsen, die entlang dem zweiten Lichtweg propagieren, ermittelt werden.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:
- Fig. 1: schematisch ein Ausführungsbeispiel einer als Scanmikroskop ausgebildeten, erfindungsgemäßen Vorrichtung und
- Fig. 2: schematisch ein Ausführungsbeispiel einer erfindungsgemäßen Vorrichtung mit einem Regelkreislauf.

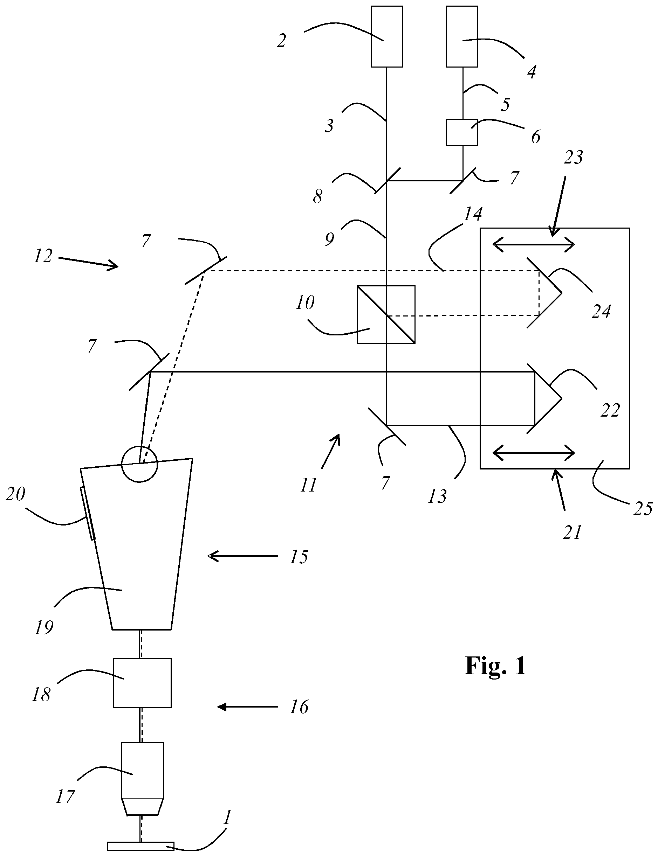

Fig. 1 zeigt schematisch ein Ausführungsbeispiel einer als Scanmikroskop ausgebildeten, erfindungsgemäßen Vorrichtung zum Untersuchen einer Probe 1. Der besseren Übersichtlichkeit halber ist jedoch lediglich die Beleuchtung der Probe, nicht jedoch das von der Probe ausgehende Detektionslicht und dessen Detektion dargestellt.

Das Scanmikroskop weist eine erste Lichtquelle 2 auf, die ein erstes, gepulstes Beleuchtungslichtbündel 3 mit einer ersten Linearpolarisationsrichtung erzeugt. Das Scanmikroskop weist außerdem eine zweite Lichtquelle 4 auf, die ein zweites, gepulstes Beleuchtungslichtbündel 5 erzeugt, dessen Linearpolarisationsrichtung eine Umschaltvorrichtung 6, insbesondere ein akustooptischer - oder elektrooptischer Modulator, fortlaufend zwischen der ersten Linearpolarisationsrichtung und einer zweiten, von der ersten Linearpolarisationsrichtung verschiedenen, Linearpolarisationsrichtung umgeschaltet.

Das zweite Beleuchtungslichtbündel 5 wird nach einer Umlenkung mit einen Umlenkspiegel 7 mit Hilfe eines Strahlvereinigers 8 mit dem ersten Beleuchtungslichtbündel 3 zu einem Primärbeleuchtungslichtbündel 9 vereinigt.

Das Primärbeleuchtungslichtbündel 9 wird anschließend in Abhängigkeit von der Linearpolarisation mit einem Polarisationsstrahlteiler 10 räumlich aufgespalten und die Anteile 13, 14 unterschiedlicher Linearpolarisation getrennt voneinander auf einen ersten Lichtweg 11 und zweiten Lichtweg 12 gelenkt. Der erste Anteil 13 mit der ersten Linearpolarisationsrichtung propagiert entlang dem ersten Lichtweg 11, während der zweite Anteil 14 mit der zweiten Linearpolarisationsrichtung entlang dem zweiten Lichtweg 12 propagiert.

Das Scanmikroskop weist ein akustooptisches Bauteil 15 auf, das die Lichtwege 11, 12 vereinigt, so dass der erste Anteil 13 der ersten Linearpolarisationslichtung kollienar vereinigt mit dem zweiten Anteil 14 der zweiten Linearpolarisationslichtung auf einen gemeinsamen Beleuchtungsstrahlengang 16 zur Beleuchtung der Probe 1 gelangt. In dem Beleuchtungsstrahlengang 16 befinden sich ein Objektiv 17, das das Beleuchtungslicht auf bzw. in die Probe 1 fokussiert, und eine Strahlablenkreinrichtung 18 zum Führen des Fokus des Beleuchtungslichtes über oder durch die Probe 1.

Das akustooptische Bauteil 15 ist als AOTF (acousto optical tunable filter) ausgeführt und weist einen optischen Kristall 19 auf, an dem ein Piezo-Schallerzeuger 20 angeordnet ist. Der Piezo-Schallerzeuger 20 wird mit drei unterschiedlichen, elektrischen HF-Frequenzen beaufschlagt und erzeugt drei, hinsichtlich ihrer Frequenz unterschiedliche, mechanische Wellen, nämlich eine erste, eine zweite und eine dritte mechanische Welle, die gleichzeitig durch den Kristall 19 propagieren, was in der Figur nicht dargestellt ist.

Die Frequenz der ersten mechanische Welle ist derart gewählt, dass an ihr das erste Beleuchtungslichtbündel 3 gebeugt und dadurch auf den Beleuchtungsstrahlengang zur Bleuchtung der Probe 1 gelenkt wird. Die Frequenz der zweiten mechanische Welle ist derart gewählt, dass an ihr das zweite Beleuchtungslichtbündel 5 gebeugt und dadurch auf den Beleuchtungsstrahlengang zur Bleuchtung der Probe 1 gelenkt wird, wenn dieses die erste Linearpolarisationsrichtung aufweist. Die Frequenz der dritten mechanische Welle ist derart gewählt, dass an ihr das zweite Beleuchtungslichtbündel 5 gebeugt und dadurch auf den Beleuchtungsstrahlengang zur Beleuchtung der Probe 1 gelenkt wird, wenn dieses die zweite Linearpolarisationsrichtung aufweist.

Neben einigen Umlenkspiegeln 7, die lediglich der Strahlführung dienen, ist im ersten Lichtweg 11 ein erstes Mittel 21 zum Einstellen der Länge des ersten Lichtweges 11 angeordnet. Das erste Mittel 21 zum Einstellen der Länge des ersten Lichtweges 11 weist einen ersten, gewinkelten Doppelspiegel 22 auf, der auf einem (nicht dargestellten) Verschiebtisch verschiebbar gelagert ist. Durch Verschieben des ersten Doppelspiegels 22 kann die Länge des ersten Lichtweges 11 verändert werden. Auch im im zweiten Lichtweg 12 ist, abgesehen von einem Umlenkspiegel 7, der lediglich der Strahlführung dient, ein zweites Mittel 23 zum Einstellen der Länge des zweiten Lichtweges 12 angeordnet. Das zweite Mittel 23 zum Einstellen der Länge des zweiten Lichtweges 12 weist einen zweiten, gewinkelten Doppelspiegel 24 auf, der auf einem (nicht dargestellten) Verschiebtisch verschiebbar gelagert ist. Durch Verschieben des zweiten Doppelspiegels 24 kann die Länge des zweiten Lichtweges 12 verändert werden.

Die Mittel 21, 23 sind Bestandteil eines Phaseneinstellmittels 25 zum Einstellen der Phase des Zugs von ersten Beleuchtungslichtpulsen des entlang dem ersten Lichtweg 11 propagierenden ersten Anteils 13 relativ zu dem Zug von zweiten Beleuchtungslichtpulsen des entlang dem zweiten Lichtweg 12 propagierenden zweiten Anteils 14.

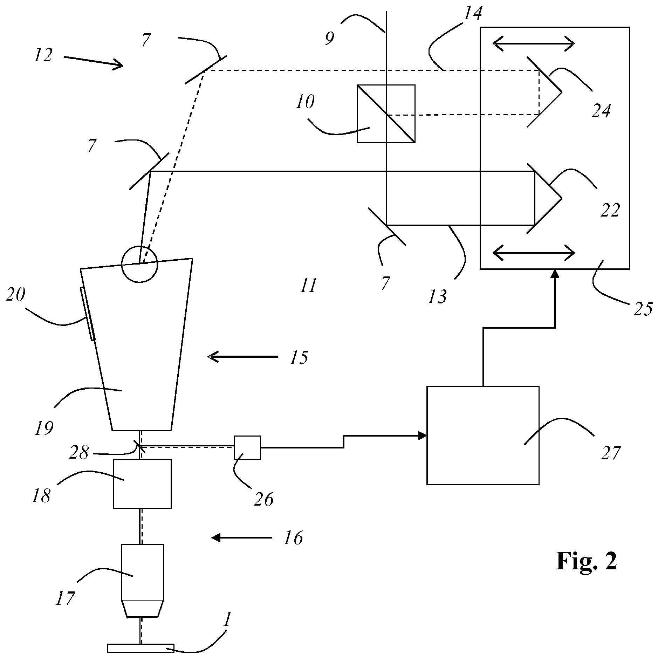

Fig. 2 zeigt schematisch ein Ausführungsbeispiel einer erfindungsgemäßen Vorrichtung mit einem Regelkreislauf zum Regeln der Phase des Zugs von ersten Beleuchtungslichtpulsen des entlang dem ersten Lichtweg 11 propagierenden ersten Anteils 13 relativ zu dem Zug von zweiten Beleuchtungslichtpulsen des entlang dem zweiten Lichtweg 12 propagierenden zweiten Anteils 14.

Der Regelkreis weist einen einen Sensor 26 auf, der das Maß der zeitlichen Überlagerung ersten und der zweiten Beleuchtungslichtpulse ermittelt und vorzugsweise als Zwei-Photonen-Absorptions-Detektor ausgebildet ist. Mit Hilfe eines Strahlteilers 28 wird aus dem von dem akustooptischen Bauteil 15 vereinigten Beleuchtungslicht ein Teil abgespalten und dem Sensor 26 zugeleitet. Der Sensor übermittelt elektrische Signale als Istwert der gemessenen Phase an eine Regelungselektronik 27, die unter Berücksichtigung der Sensorsignale einen Stellwert an das Phaseneinstellmittel 25 derart ausgibt, dass im Ergebnis die gewünschte Phase, vorzugsweise eine Phase von Null, eingeregelt wird.

Die Erfindung wurde in Bezug auf eine besondere Ausführungsform beschrieben, wobei für gleiche oder gleichwirkende Bauteile zumeist dieselben Bezugszeichen verwendet sind. Es ist jedoch selbstverständlich, dass Änderungen und Abwandlungen durchgeführt werden können, ohne dabei den Schutzbereich der nachstehenden Ansprüche zu verlassen.

## Patentansprüche

1. Verfahren zum Untersuchen einer Probe (1) in einem Scanmikroskop oder einem konfokalen Scanmikroskop, wobei die Probe (1) mit Beleuchtungslicht beaufschlagt wird und von der Probe (1) ausgehendes Detektionslicht zu einem Detektor gelenkt wird und wobei das Beleuchtungslicht durch ein akustooptisches Bauteil (15) gelenkt wird, mit dem das Beaufschlagen der Probe (1) mit Beleuchtungslicht zeitweise unterbrochen werden kann, wobei die Probe (1) mit einem ersten Beleuchtungslichtbündel (3), das eine erste Linearpolarisationsrichtung aufweist, und mit einem zweiten Bleuchtungslichtbündel (5), dessen Linearpolarisationsrichtung mittels einer Umschaltvorrichtung (6) fortlaufend zwischen der ersten Linearpolarisationsrichtung und einer zweiten, von der ersten Linearpolarisationsrichtung verschiedenen, Linearpolarisationsrichtung umgeschaltet wird, beleuchtet wird, wobei das Beleuchtungslicht der ersten Linearpolarisationsrichtung entlang einem ersten Lichtweg verläuft und das Beleuchtungslicht der zweiten Linearpolarisationsrichtung entlang einem zweiten Lichtweg verläuft, und wobei das akustooptische Bauteil (15) den ersten Lichtweg und den zweiten Lichtweg vereinigt, so dass das Beleuchtungslicht der ersten Linearpolarisationsrichtung kollinear vereinigt mit dem Beleuchtungslicht der zweiten Linearpolarisationsrichtung auf einen gemeinsamen Beleuchtungsstrahlengang zur Beleuchtung der Probe (1) gelangt, **dadurch gekennzeichnet, dass** zunächst ein Primärbeleuchtungslichtbündel (9), das das erste Beleuchtungslichtbündel (3) und/oder das zweite Beleuchtungslichtbündel (5) kollinear vereinigt beinhaltet, erzeugt wird, dass das Primärbeleuchtungslichtbündel (9) dann in Abhängigkeit von der Linearpolarisation, insbesondere mit einem Polarisationsstrahlteiler (10), räumlich aufgespalten wird und die Anteile unterschiedlicher Linearpolarisation getrennt voneinander auf den ersten und zweiten Lichtweg gelenkt werden, und dass das akustooptische Bauteil (15) als AOTF (acousto optical tunable filter) ausgeführt ist und mit drei unterschiedlichen elektrischen HF-Frequenzen beaufschlagt und drei, hinsichtlich ihrer Frequenz unterschiedliche, mechanische Wellen erzeugt werden, nämlich eine erste, eine zweite und eine dritte mechanische Welle, die gleichzeitig durch den Kristall (19) des AOTF propagieren, wobei die Frequenz der ersten mechanischen Welle derart gewählt ist, dass an ihr das erste Beleuchtungslichtbündel (3) gebeugt und dadurch auf den Beleuchtungsstrahlengang zur Bleuchtung der Probe (1) gelenkt wird, die Frequenz der zweiten mechanischen Welle derart gewählt ist, dass an ihr das zweite Beleuchtungslichtbündel (5) gebeugt und dadurch auf den Beleuchtungsstrahlengang zur Bleuchtung der Probe (1) gelenkt wird, wenn dieses die erste Linearpolarisationsrichtung aufweist, und wobei die Frequenz der dritten mechanische Welle derart gewählt ist, dass an ihr das zweite Beleuchtungslichtbündel (5) gebeugt und dadurch auf den Beleuchtungsstrahlengang zur Beleuchtung der Probe (1) gelenkt wird, wenn dieses die zweite Linearpolarisationsrichtung aufweist.

2. Verfahren nach Anspruch 1, **dadurch gekennzeichnet, dass** zumindest ein Teilbereich der Probe (1) mit dem ersten Beleuchtungslichtbündel (3) und dem zweiten Beleuchtungslichtbündel (5) gescannt wird.

3. Verfahren nach Anspruch 1 oder 2, **dadurch gekennzeichnet, dass**
a. das Beaufschlagen einer Probe (1) mit dem ersten Beleuchtungslichtbündel (3) und/oder mit dem zweiten Beleuchtungslichtbündel (5) mit dem akustooptischen Bauteil (15) zeitweise unterbrochen wird oder dass
b. das Beaufschlagen einer Probe (1) mit dem ersten Beleuchtungslichtbündel (3) und/oder mit dem zweiten Beleuchtungslichtbündel (5) mit dem akustooptischen Bauteil (15), insbesondere automatisch, unterbrochen wird, wenn das erste Beleuchtungslichtbündel (3) und/oder das zweite Beleuchtungslichtbündel (5) einen Bereich der Probe (1) beleuchten würden, der außerhalb eines zu untersuchenden Bereichs liegt, oder dass
c. das Beaufschlagen einer Probe (1) mit dem ersten Beleuchtungslichtbündel (3) und/oder mit dem zweiten Beleuchtungslichtbündel (15) mit dem akustooptischen Bauteil (15), insbesondere automatisch, in den Umkehrbereichen eines mäanderförmigen Scans und/oder auf den Rücklaufbahnen unterbrochen wird.

4. Verfahren nach einem der Ansprüche 1 bis 3, **dadurch gekennzeichnet, dass** mit dem akustooptischen Bauteil (15) die Lichtleistung des ersten und/oder des zweiten Beleuchtungslichtbündels (3, 5) eingestellt und/oder geregelt wird.

5. Verfahren nach einem der Ansprüche 1 bis 4, **dadurch gekennzeichnet, dass** das erste Beleuchtungslichtbündel (3) und/oder dass das zweite Beleuchtungslichtbündel (5) gepulst sind.

6. Verfahren nach einem der Ansprüche 1 bis 5, **dadurch gekennzeichnet, dass** das Beleuchtungslicht der ersten Linearpolarisationslichtung, das entlang dem ersten Lichtweg verläuft, einen Zug erster Beleuchtungslichtpulse aufweist und dass das Beleuchtungslicht der zweiten Linearpolarisationslichtung, das entlang dem zweiten Lichtweg verläuft, einen Zug zweiter Beleuchtungslichtpulse aufweist, wobei die Phase des Zugs von ersten Beleuchtungslichtpulsen relativ zu dem Zug von zweiten Beleuchtungslichtpulsen eingestellt und/oder geregelt wird.

7. Verfahren nach Anspruch 6, **dadurch gekennzeichnet, dass** im ersten Lichtweg ein erstes Mittel (22) zum Einstellen der Länge des ersten Lichtweges angeordnet ist und/oder dass im zweiten Lichtweg wenigstens ein zweites Mittel (24) zum Einstellen der Länge des zweiten Lichtweges angeordnet ist, wobei das erste Mittel (22) und/oder das zweite Mittel (24) Teil eines Regelkreises zum Regeln der Phase ist.

8. Verfahren nach Anspruch 6 oder 7, **dadurch gekennzeichnet, dass** die Phase mit Hilfe eines Sensors (26), insbesondere mit Hilfe eines Zwei-Photonen-Absorptions-Detektors, der, insbesondere parasitär, zumindest einen Teil des vereinigten Beleuchtungslichtes empfängt, erfasst wird.

9. Verfahren nach einem der Ansprüche 1 bis 8, **dadurch gekennzeichnet, dass** die Linearpolarisation des zweiten Beleuchtungslichtbündels (5) mit einer Frequenz umgeschaltet wird, die kleiner ist, als eine Pulsfolgefrequenz des ersten und/oder des zweiten Beleuchtungslichtbündels (3, 5).

10. Verfahren nach einem der Ansprüche 1 bis 9, **dadurch gekennzeichnet, dass**
a. das erste Beleuchtungslichtbündel (3) als Stokes-Beleuchtungslichtbündel und das zweite Beleuchtungslichtbündel (5) als Pump-Beleuchtungslichtbündel zum Durchführen einer Probenuntersuchung mittels kohärenter Raman-Spektroskopie und/oder zum Erzeugen einer Raman-Abbildung, insbesondere einer SRS-Abbildung, wenigstens eines Teils einer mikroskopischen Probe (1) verwendet wird, oder dass
b. das zweite Beleuchtungslichtbündel (5) als Stokes-Beleuchtungslichtbündel und das erste Beleuchtungslichtbündel (3) als Pump-Beleuchtungslichtbündel zum Durchführen einer Probenuntersuchung mittels kohärenter Raman-Spektroskopie und/oder zum Erzeugen einer Raman-Abbildung, insbesondere einer SRS-Abbildung, wenigstens eines Teils einer mikroskopischen Probe (1) verwendet wird.

11. Vorrichtung zum Untersuchen einer Probe, (1), wobei die Vorrichtung ausgebildet ist, ein Verfahren nach einem der Ansprüche 1 bis 10 auszuführen, wobei die Probe (1) mit Beleuchtungslicht beaufschlagt wird und von der Probe (1) ausgehendes Detektionslicht zu einem Detektor gelenkt wird und wobei das Beleuchtungslicht durch ein akustooptisches Bauteil (15) gelenkt wird, mit dem das Beaufschlagen der Probe (1) mit Beleuchtungslicht zeitweise unterbrochen werden kann, **dadurch gekennzeichnet, dass** das Beleuchtungslicht ein erstes Beleuchtungslichtbündel (3) mit einer ersten Linearpolarisationsrichtung aufweist, und ein zweites Bleuchtungslichtbündel (5), dessen Linearpolarisationsrichtung eine Umschaltvorrichtung (6), insbesondere ein akustooptischer - oder elektrooptischer Modulator, fortlaufend zwischen der ersten Linearpolarisationsrichtung und einer zweiten, von der ersten Linearpolarisationsrichtung verschiedenen, Linearpolarisationsrichtung umschaltet, aufweist, wobei zunächst ein Primärbeleuchtungslichtbündel (9), das das erste Beleuchtungslichtbündel (3) und/oder das zweite Beleuchtungslichtbündel (5) kollinear vereinigt beinhaltet, erzeugt wird, dass das Primärbeleuchtungslichtbündel (9) dann in Abhängigkeit von der Linearpolarisation, insbesondere mit einem Polarisationsstrahlteiler (10), räumlich aufgespalten wird und die Anteile unterschiedlicher Linearpolarisation getrennt voneinander auf einen ersten und einen zweiten Lichtweg gelenkt werden, und dass das akustooptische Bauteil (15) als AOTF (acousto optical tunable filter) ausgeführt ist, wobei das Beleuchtungslicht der ersten Linearpolarisationsrichtung entlang dem ersten Lichtweg verläuft und das Beleuchtungslicht der zweiten Linearpolarisationsrichtung entlang dem zweiten Lichtweg verläuft, und wobei das akustooptische Bauteil (15) die Lichtwege vereinigt, so dass das Beleuchtungslicht der ersten Linearpolarisationsrichtung kollinear vereinigt mit dem Beleuchtungslicht der zweiten Linearpolarisationsrichtung auf einen gemeinsamen Beleuchtungsstrahlengang zur Beleuchtung der Probe (1) gelangt.

12. Modul zur Herstellung einer Vorrichtung nach Anspruch 11, **dadurch gekennzeichnet, dass** das Modul einen Polarisationsstrahlteiler (10), der ausgehend von dem kollinear vereinigten ersten Beleuchtungslichtbündel (3) und zweiten Beleuchtungslichtbündel (5) den Beginn eines ersten und eines zweiten räumlich aufgespaltenen Lichtweges definiert, und ein als AOTF (acousto optical tunable filter) ausgeführtes akustooptisches Bauteil (15), das den ersten und den zweiten Lichtweg vereinigt, aufweist.

13. Modul nach Anspruch 12, **dadurch gekennzeichnet, dass**
a. im ersten Lichtweg ein erstes Mittel (22) zum Einstellen der Länge des ersten Lichtweges angeordnet ist und/oder im zweiten Lichtweg wenigstens ein zweites Mittel (24) zum Einstellen der Länge des zweiten Lichtweges angeordnet ist oder dass
b. eine Regelungsvorrichtung (27) zum Regeln der Phase eines auf dem ersten Lichtweg propagierenen Pulszuges relativ zu einem auf dem zweiten Lichtweg propagierenden propagierenen Pulszuges vorhanden ist.

14. Modul nach Anspruch 12 oder 13, **dadurch gekennzeichnet, dass** das Modul einen Sensor (26), insbesondere Zwei-Photonen-Absorptions-Detektor, zum Ermitteln des Maßes der zeitlichen Überlagerung von ersten Beleuchtungslichtpulsen, die entlang dem ersten Lichtweg propagieren und zweiten Beleuchtungslichtpulsen, die entlang dem zweiten Lichtweg propagieren, aufweist.

## Claims

1. Method for examining a sample (1) in a scanning microscope or a confocal scanning microscope, wherein the sample (1) is impinged on by illumination light and detection light emanating from the sample (1) is directed to a detector, and wherein the illumination light is directed through an acousto-optical component (15), which can intermittently interrupt the impingement of illumination light on the sample (1), wherein the sample (1) is illuminated with a first illumination light beam (3) having a first linear polarization direction, and with a second illumination light beam (5), the linear polarization direction of which is continuously switched over between the first linear polarization direction and a second linear polarization direction, which is different from the first linear polarization direction, by means of a switchover device (6), wherein the illumination light of the first linear polarization direction passes along a first light path and the illumination light of the second linear polarization direction passes along a second light path, and wherein the acousto-optical component (15) combines the first light path and the second light path so that the illumination light of the first linear polarization direction collinearly combined with the illumination light of the second linear polarization direction passes onto a common illumination beam path for illuminating the sample (1), **characterized in that** firstly a primary illumination light beam (9) is generated, which includes the first illumination light beam (3) and/or the second illumination light beam (5) in collinearly combined fashion, **in that** then the primary illumination light beam (9) is spatially split in a manner dependent on the linear polarization, in particular by a polarization beam splitter (10), and the portions having different linear polarizations are directed separately from one another onto the first and second light paths, and **in that** the acousto-optical component (15) is embodied as an AOTF (acousto-optical tunable filter), and three different electrical RF frequencies are applied thereto and three mechanical waves that differ with regard to their frequency are generated, namely a first, a second and a third mechanical wave, which propagate simultaneously through the crystal (19) of the AOTF, wherein the frequency of the first mechanical wave is chosen such that the first illumination light beam (3) is diffracted at the latter and is thereby directed onto the illumination beam path for illuminating the sample (1), the frequency of the second mechanical wave is chosen such that the second illumination light beam (5) is diffracted at the latter and is thereby directed onto the illumination beam path for illuminating the sample (1) if said beam has the first linear polarization direction, and wherein the frequency of the third mechanical wave is chosen such that the second illumination light beam (5) is diffracted at the latter and is thereby directed onto the illumination beam path for illuminating the sample (1) if said beam has the second linear polarization direction.

2. Method according to Claim 1, **characterized in that** at least one partial region of the sample (1) is scanned by means of the first illumination light beam (3) and the second illumination light beam (5).

3. Method according to Claim 1 or 2, **characterized in that**
a. the impingement of the first illumination light beam (3) and/or the second illumination light beam (5) on a sample (1) is intermittently interrupted by the acousto-optical component (15), or **in that**
b. the impingement of the first illumination light beam (3) and/or the second illumination light beam (5) on a sample (1) is interrupted, in particular automatically, by the acousto-optical component (15) if the first illumination light beam (3) and/or the second illumination light beam (5) would illuminate a region of the sample (1) which lies outside a region to be examined, or **in that**
c. the impingement of the first illumination light beam (3) and/or the second illumination light beam (15) on a sample (1) is interrupted by the acousto-optical component (15), in particular automatically, in the turnaround regions of a meandering scan and/or on the return paths.

4. Method according to any of Claims 1 to 3, **characterized in that** the light power of the first and/or the second illumination light beam (3, 5) is adjusted and/or controlled by the acousto-optical component (15).

5. Method according to any of Claims 1 to 4, **characterized in that** the first illumination light beam (3) and/or the second illumination light beam (5) are/is pulsed.

6. Method according to any of Claims 1 to 5, **characterized in that** the illumination light of the first linear polarization direction that passes along the first light path has a train of first illumination light pulses, and **in that** the illumination light of the second linear polarization direction that passes along the second light path has a train of second illumination light pulses, wherein the phase of the train of first illumination light pulses relative to the train of second illumination light pulses is adjusted and/or controlled.

7. Method according to Claim 6, **characterized in that** a first means (22) for adjusting the length of the first light path is arranged in the first light path, and/or **in that** at least one second means (24) for adjusting the length of the second light path is arranged in the second light path, wherein the first means (22) and/or the second means (24) are/is part of a control loop for controlling the phase.

8. Method according to Claim 6 or 7, **characterized in that** the phase is detected with the aid of a sensor (26), in particular with the aid of a two-photon absorption detector, which receives, in particular parasitically, at least part of the combined illumination light.

9. Method according to any of Claims 1 to 8, **characterized in that** the linear polarization of the second illumination light beam (5) is switched over at a frequency that is lower than a pulse repetition frequency of the first and/or the second illumination light beam (3, 5).

10. Method according to any of Claim 1 to 9, **characterized in that**
a. the first illumination light beam (3) is used as a Stokes illumination light beam and the second illumination light beam (5) is used as a Pump illumination light beam for the purpose of carrying out a sample examination by means of coherent Raman spectroscopy and/or for the purpose of generating a Raman image representation, in particular an SRS image representation, of at least one part of a microscopic sample (1), or **in that**
b. the second illumination light beam (5) is used as a Stokes illumination light beam and the first illumination light beam (3) is used as a Pump illumination light beam for the purpose of carrying out a sample examination by means of coherent Raman spectroscopy and/or for the purpose of generating a Raman image representation, in particular an SRS image representation, of at least one part of a microscopic sample (1).

11. Device for examining a sample (1), wherein the device is configured to carry out a method according to any of Claims 1 to 10, wherein the sample (1) is impinged on by illumination light and detection light emanating from the sample (1) is directed to a detector, and wherein the illumination light is directed through an acousto-optical component (15), which can intermittently interrupt the impingement of illumination light on the sample (1), **characterized in that** the illumination light has a first illumination light beam (3) having a first linear polarization direction and has a second illumination light beam (5), the linear polarization direction of which is continuously switched over between the first linear polarization direction and a second linear polarization direction, which is different from the first linear polarization direction, by a switchover device (6), in particular an acousto-optical or electro-optical modulator, wherein firstly a primary illumination light beam (9) is generated, which includes the first illumination light beam (3) and/or the second illumination light beam (5) in collinearly combined fashion, **in that** then the primary illumination light beam (9) is spatially split in a manner dependent on the linear polarization, in particular by a polarization beam splitter (10), and the portions having different linear polarizations are directed separately from one another onto a first and a second light path, and **in that** the acousto-optical component (15) is embodied as an AOTF (acousto-optical tunable filter), wherein the illumination light of the first linear polarization direction passes along the first light path and the illumination light of the second linear polarization direction passes along the second light path, and wherein the acousto-optical component (15) combines the light paths so that the illumination light of the first linear polarization direction collinearly combined with the illumination light of the second linear polarization direction passes onto a common illumination beam path for illuminating the sample (1).

12. Module for producing a device according to Claim 11, **characterized in that** the module has a polarization beam splitter (10), which, proceeding from the collinearly combined first illumination light beam (3) and second illumination light beam (5), defines the beginning of a first and a second spatially split light path, and an acousto-optical component (15), which is embodied as an AOTF (acousto-optical tunable filter) and which combines the first and second light paths.

13. Module according to Claim 12, **characterized in that**
a. a first means (22) for adjusting the length of the first light path is arranged in the first light path, and/or at least one second means (24) for adjusting the length of the second light path is arranged in the second light path, or **in that**
b. a control device (27) for controlling the phase of a pulse train propagating on the first light path relative to a pulse train propagating on the second light path is present.

14. Module according to Claim 12 or 13, **characterized in that** the module has a sensor (26), in particular a two-photon absorption detector, for determining the measure of the temporal superposition of first illumination light pulses that propagate along the first light path and second illumination light pulses that propagate along the second light path.

## Revendications

1. Procédé pour examiner un échantillon (1) dans un microscope à balayage ou un microscope à balayage confocal, l'échantillon (1) étant exposé à de la lumière d'éclairage et la lumière de détection émanant de l'échantillon (1) étant dirigée vers un détecteur et la lumière d'éclairage étant dirigée par un composant acousto-optique (15) avec lequel l'exposition de l'échantillon (1) à la lumière d'éclairage peut être temporairement interrompu, l'échantillon (1) étant éclairé avec un premier faisceau lumineux d'éclairage (3), lequel présente une première direction de polarisation linéaire, et avec un deuxième faisceau lumineux d'éclairage (5), dont la direction de polarisation linéaire est continuellement permutée au moyen d'un dispositif de permutation (6) entre la première direction de polarisation linéaire et une deuxième direction de polarisation linéaire, différente de la première direction de polarisation linéaire, la lumière d'éclairage de la première direction de polarisation linéaire suivant un tracé le long d'un premier trajet optique et la lumière d'éclairage de la deuxième direction de polarisation linéaire suivant un tracé le long d'un deuxième trajet optique, et le composant acousto-optique (15) réunissant le premier trajet optique et le deuxième trajet optique, de sorte que la lumière d'éclairage de la première direction de polarisation linéaire parvienne sur une trajectoire de faisceau d'éclairage commune en étant réunie avec la lumière d'éclairage de la deuxième direction de polarisation linéaire en vue d'éclairer l'échantillon (1), **caractérisé en ce qu'**un faisceau lumineux d'éclairage primaire (9) est toute d'abord généré, lequel contient le premier faisceau lumineux d'éclairage (3) et/ou le deuxième faisceau lumineux d'éclairage (5) réunis de manière colinéaire, **en ce que** le faisceau lumineux d'éclairage primaire (9) est ensuite dissocié dans l'espace en fonction de la polarisation linéaire, notamment avec un séparateur de faisceaux à polarisation (10) et les fractions ayant une polarisation linéaire différente sont dirigées séparément l'une de l'autre sur le premier trajet optique et le deuxième trajet optique, et **en ce que** le composant acousto-optique (15) est réalisé sous la forme d'un filtre accordable acousto-optique (AOTF - Acousto-optical tunable filter) et soumis à trois fréquences HF électriques différentes et trois ondes mécaniques, différentes du point de vue de leurs fréquences, sont générées, à savoir une première, une deuxième et une troisième onde mécanique, lesquelles se propagent simultanément à travers le cristal (19) de l'AOTF, la fréquence de la première onde mécanique étant choisie de telle sorte que le premier faisceau lumineux d'éclairage (3) est diffracté sur celle-ci et ainsi dirigé sur la trajectoire de faisceau d'éclairage en vue de l'éclairage de l'échantillon (1), la fréquence de la deuxième onde mécanique étant choisie de telle sorte que le deuxième faisceau lumineux d'éclairage (5) est diffracté sur celle-ci et ainsi dirigé sur la trajectoire de faisceau d'éclairage en vue de l'éclairage de l'échantillon (1), lorsque celui-ci présente la première direction de polarisation linéaire, et la fréquence de la troisième onde mécanique étant choisie de telle sorte que le deuxième faisceau lumineux d'éclairage (5) est diffracté sur celle-ci et ainsi dirigé sur la trajectoire de faisceau d'éclairage en vue de l'éclairage de l'échantillon (1), lorsque celui-ci présente la première direction de polarisation linéaire.

2. Procédé selon la revendication 1, **caractérisé en ce qu'**au moins une zone partielle de l'échantillon (1) est balayée avec le premier faisceau lumineux d'éclairage (3) et le deuxième faisceau lumineux d'éclairage (5).

3. Procédé selon la revendication 1 ou 2, **caractérisé en ce que**
a. l'exposition d'un échantillon (1) au premier faisceau lumineux d'éclairage (3) et/ou au deuxième faisceau lumineux d'éclairage (5) est interrompue temporairement avec le composant acousto-optique (15) ou **en ce que**
b. l'exposition d'un échantillon (1) au premier faisceau lumineux d'éclairage (3) et/ou au deuxième faisceau lumineux d'éclairage (5) est interrompue, en particulier automatiquement, avec le composant acousto-optique (15) lorsque le premier faisceau lumineux d'éclairage (3) et/ou le deuxième faisceau lumineux d'éclairage (5) éclaireraient une zone de l'échantillon (1) qui se trouve en-dehors d'une zone à examiner, ou **en ce que**
c. l'exposition d'un échantillon (1) au premier faisceau lumineux d'éclairage (3) et/ou au deuxième faisceau lumineux d'éclairage (15) est interrompue, en particulier automatiquement, avec le composant acousto-optique (15) dans les zones d'inversion d'un balayage en forme de méandre et/ou sur les bandes de retour.

4. Procédé selon l'une des revendications 1 à 3, **caractérisé en ce que** la puissance lumineuse du premier et/ou du deuxième faisceau lumineux d'éclairage (3, 5) est réglée et/ou régulée avec le composant acousto-optique (15).

5. Procédé selon l'une des revendications 1 à 4, **caractérisé en ce que** le premier faisceau lumineux d'éclairage (3) et/ou le deuxième faisceau lumineux d'éclairage (5) sont pulsés.

6. Procédé selon l'une des revendications 1 à 5, **caractérisé en ce que** la lumière d'éclairage de la première direction de polarisation linéaire, qui suit un tracé le long du premier trajet optique, présente un train de premières impulsions lumineuses d'éclairage et **en ce que** la lumière d'éclairage de la deuxième direction de polarisation linéaire, qui suit un tracé le long du deuxième trajet optique, présente un train de deuxièmes impulsions lumineuses d'éclairage, la phase du train de premières impulsions lumineuses d'éclairage étant réglée et/ou régulée par rapport au train de deuxièmes impulsions lumineuses d'éclairage.

7. Procédé selon la revendication 6, **caractérisé en ce qu'**un premier moyen (22) destiné à régler la longueur du premier trajet optique est disposé dans le premier trajet optique et/ou **en ce qu'**au moins un deuxième moyen (24) destiné à régler la longueur du deuxième trajet optique est disposé dans le deuxième trajet optique, le premier moyen (22) et/ou le deuxième moyen (24) faisant partie d'un circuit de régulation destiné à réguler la phase.

8. Procédé selon la revendication 6 ou 7, **caractérisé en ce que** la phase est détectée à l'aide d'un capteur (26), notamment à l'aide d'un détecteur d'absorption à deux photons qui reçoit, notamment de manière parasitaire, au moins une partie de la lumière d'éclairage réunie.

9. Procédé selon l'une des revendications 1 à 8, **caractérisé en ce que** la polarisation linéaire du deuxième faisceau lumineux d'éclairage (5) est permutée à une fréquence qui est inférieure à la fréquence de train d'impulsions du premier et/ou du deuxième faisceau lumineux d'éclairage (3, 5).

10. Procédé selon l'une des revendications 1 à 9, **caractérisé en ce que**
a. le premier faisceau lumineux d'éclairage (3) est utilisé en tant que faisceau lumineux d'éclairage de Stokes et le deuxième faisceau lumineux d'éclairage (5) en tant que faisceau lumineux d'éclairage de pompage en vue d'effectuer un examen d'échantillon au moyen de la spectroscopie Raman cohérente et/ou en vue de générer une représentation de l'effet Raman, notamment une représentation SRS, d'au moins une partie d'un échantillon (1) microscopique, ou **en ce que**
b. le deuxième faisceau lumineux d'éclairage (5) est utilisé en tant que faisceau lumineux d'éclairage de Stokes et le premier faisceau lumineux d'éclairage (3) en tant que faisceau lumineux d'éclairage de pompage en vue d'effectuer un examen d'échantillon au moyen de la spectroscopie Raman cohérente et/ou en vue de générer une représentation de l'effet Raman, notamment une représentation SRS, d'au moins une partie d'un échantillon (1) microscopique.

11. Dispositif pour examiner un échantillon (1), le dispositif étant configuré pour mettre en oeuvre un procédé selon l'une des revendications 1 à 10, l'échantillon (1) étant exposé à de la lumière d'éclairage et la lumière de détection émanant de l'échantillon (1) étant dirigée vers un détecteur et la lumière d'éclairage étant dirigée par un composant acousto-optique (15) avec lequel l'exposition de l'échantillon (1) à la lumière d'éclairage peut être temporairement interrompue, **caractérisé en ce que** la lumière d'éclairage présente un premier faisceau lumineux d'éclairage (3) ayant une première direction de polarisation linéaire, et présente un deuxième faisceau lumineux d'éclairage (5), dont la direction de polarisation linéaire est continuellement permutée au moyen d'un dispositif de permutation (6), notamment un modulateur acousto-optique ou électro-optique, entre la première direction de polarisation linéaire et une deuxième direction de polarisation linéaire, différente de la première direction de polarisation linéaire, un faisceau lumineux d'éclairage primaire (9) étant toute d'abord généré, lequel contient le premier faisceau lumineux d'éclairage (3) et/ou le deuxième faisceau lumineux d'éclairage (5) réunis de manière colinéaire, **en ce que** le faisceau lumineux d'éclairage primaire (9) est ensuite dissocié dans l'espace en fonction de la polarisation linéaire, notamment avec un séparateur de faisceaux à polarisation (10) et les fractions ayant une polarisation linéaire différente sont dirigées séparément l'une de l'autre sur un premier et un deuxième trajet optique, et **en ce que** le composant acousto-optique (15) est réalisé sous la forme d'un filtre accordable acousto-optique (AOTF - Acousto-optical tunable filter), la lumière d'éclairage de la première direction de polarisation linéaire suivant un tracé le long du premier trajet optique et la lumière d'éclairage de la deuxième direction de polarisation linéaire suivant un tracé le long du deuxième trajet optique, et le composant acousto-optique (15) réunissant les trajets optiques, de sorte que la lumière d'éclairage de la première direction de polarisation linéaire parvienne sur une trajectoire de faisceau d'éclairage commune en étant réunie de manière colinéaire avec la lumière d'éclairage de la deuxième direction de polarisation linéaire en vue d'éclairer l'échantillon (1).

12. Module pour fabriquer un dispositif selon la revendication 11, **caractérisé en ce que** le module possède un séparateur de faisceaux à polarisation (10) qui, en partant du premier faisceau lumineux d'éclairage (3) et du deuxième faisceau lumineux d'éclairage (5) réunis de manière colinéaire, définit le début d'un premier et d'un deuxième trajet optique dissociés dans l'espace, et un composant acousto-optique (15) réalisé sous la forme d'un filtre accordable acousto-optique (AOTF - Acousto-optical tunable filter) qui réunit le premier et le deuxième trajet optique.

13. Module selon la revendication 12, **caractérisé en ce que**
a. un premier moyen (22) destiné à régler la longueur du premier trajet optique est disposé dans le premier trajet optique et/ou au moins un deuxième moyen (24) destiné à régler la longueur du deuxième trajet optique est disposé dans le deuxième trajet optique, ou **en ce que**
b. un dispositif de régulation (27) destiné à réguler la phase d'un train d'impulsions qui se propage sur le premier trajet optique par rapport à un train d'impulsions qui se propage sur le deuxième trajet optique est présent.

14. Module selon la revendication 12 ou 13, **caractérisé en ce que** le module possède un capteur (26), notamment un détecteur d'absorption à deux photons, destiné à déterminer la mesure de la superposition dans le temps de premières impulsions lumineuses d'éclairage, qui se propagent le long du premier trajet optique, et de deuxièmes impulsions lumineuses d'éclairage, qui se propagent le long du deuxième trajet optique.
